# EUROPEAN PATENT APPLICATION

(11) **EP 4 848 607 A1**
(43) Date of publication of application: **02.12.2026**
(21) Application number: 25742811.0
(22) Date of filing: 15.01.2025
(51) Int. Cl.: H04B 7/06, H04W 72/232, H04L 5/00, H04W 8/22, H04W 24/08, H04B 17/345, H04W 24/10, H04W 72/1268

(54) **METHOD PERFORMED BY TERMINAL OR NETWORK IN WIRELESS COMMUNICATION SYSTEM, AND DEVICE THEREFOR**

(30) Priority: 23.01.2024 US 202463623816 P
(71) Applicant: LG Electronics Inc., Yeongdeungpo-gu Seoul 07336 (KR)
(72) Inventor: PARK, Haewook, Seoul 06772 (KR); KIM, Hyungtae, Seoul 06772 (KR); KANG, Jiwon, Seoul 06772 (KR); KIM, Seonwook, Seoul 06772 (KR)
(74) Representative: Mooser, Sebastian Thomas
(86) International application number: PCT/KR2025/000846
(87) International publication number: WO 2025/159438

(57) **Abstract**

According to at least one of embodiments of the present disclosure, a user equipment (UE) performs receiving information about a channel state information (CSI) reporting configuration via higher layer signaling, receiving downlink control information (DCI) including information for a CSI request through a physical downlink control channel (PDCCH), and transmitting a CSI report related to the CSI request based on a condition for a valid CSI report being satisfied, and based on the CSI report being related to a plurality of CSI-RS resource indicators (CRIs), the Z value and the Z' value are increased by multiplying a scaling value.

## Description

### TECHNICAL FIELD

The present disclosure relates to a wireless communication system, and more specifically, to a method for transmitting or receiving an uplink/downlink wireless signal by a terminal or a network in a wireless communication system and an apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In NR Rel.15 to 18, up to 32-Tx port CSI-RS transmission is supported, and a CSI-RS resource indicator (CRI) is defined that indicates the CSI-RS used for a CSI report by a UE, and 1 CRI is related with 1 CSI report.

To increase system throughput in NR Rel-19, discussions have been underway to expand to up to 128 port CSI-RS.

### DISCLOSURE

### Technical Problem

An object of the present disclosure is to provide a method of efficiently performing a wireless signal transmission and reception process and a device therefor. For example, methods are provided for a CSI report to a plurality of CRIs.

In addition to the object described above, other objects may be inferred from the description below.

### Technical Solution

According to an aspect of the present disclosure, a method performed by a user equipment (UE) includes receiving information about a channel state information (CSI) reporting configuration via higher layer signaling, receiving downlink control information (DCI) including information for a CSI request through a physical downlink control channel (PDCCH), and transmitting a CSI report related to the CSI request based on a condition for a valid CSI report being satisfied, wherein the UE determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and the UE increases the Z value and the Z' value by multiplying a scaling value based on the CSI report being related to a plurality of CSI-RS resource indicators (CRIs).

The CSI processing unit (CPU) value occupied by the CSI report may be determined based on the number of channel measurement resources (CMRs) related to the plurality of CRIs.

The CPU value occupied by the CSI report may be determined by multiplying the number of the CMRs by a second scaling value determined according to the capability of the UE.

The CPU value occupied by the CSI report may be determined based on a combination of the number of the CMRs and the number of interference measurement resources (IMRs) related to the plurality of CRIs.

The CSI report may include a plurality of CSIs for a plurality of CSI-RS resources. The scaling value may be determined based on the number of the plurality of CSIs.

The scaling value may be determined based on the number of the plurality of CRIs.

The scaling value may be an integer 2.

The CSI report may be an aperiodic CSI report transmitted through a physical uplink shared channel (PUSCH).

According to another aspect of the present disclosure, a non-transitory computer-readable recording medium having recorded thereon a program for performing the method described above may be provided.

According to another aspect of the present disclosure, a device includes a memory configured to store instructions, and a processor configured to perform operations by executing the instructions, wherein the operations of the processor include receiving information about a channel state information (CSI) reporting configuration via higher layer signaling, receiving downlink control information (DCI) including information for a CSI request through a physical downlink control channel (PDCCH), and transmitting a CSI report related to the CSI request based on a condition for a valid CSI report being satisfied, the device determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and the device increases the Z value and the Z' value by multiplying a scaling value based on the CSI report being related to a plurality of CSI-RS resource indicators (CRIs).

The device may further include a transceiver.

The device may be a user equipment (UE) in a wireless communication system.

The device may be a processing device configured to control a user equipment (UE) in a wireless communication system.

According to another aspect of the present disclosure, a method performed by a base station (BS) includes transmitting information about a channel state information (CSI) reporting configuration to a user equipment (UE) via higher layer signaling, transmitting downlink control information (DCI) including information for a CSI request to the UE through a physical downlink control channel (PDCCH), and receiving a CSI report related to the CSI request from the UE based on a condition for a valid CSI report being satisfied, wherein whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and based on the CSI report being related to a plurality of CSI-RS resource indicators (CRIs), the Z value and the Z' value are increased by multiplying a scaling value.

According to another aspect of the present disclosure, a non-transitory computer-readable recording medium having recorded thereon a program for performing the method described above may be provided.

According to another aspect of the present disclosure, a base station (BS) includes a memory configured to store instructions, and a processor configured to perform operations by executing the instructions, wherein the operations of the processor include transmitting information about a channel state information (CSI) reporting configuration to a user equipment (UE) via higher layer signaling, transmitting downlink control information (DCI) including information for a CSI request to the UE through a physical downlink control channel (PDCCH), and receiving a CSI report related to the CSI request from the UE based on a condition for a valid CSI report being satisfied, whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and based on the CSI report being related to a plurality of CSI-RS resource indicators (CRIs), the Z value and the Z' value are increased by multiplying a scaling value.

### Advantageous Effects

According to the present disclosure, wireless signal transmission and reception may be efficiently performed in a wireless communication system. For example, complexity required for channel state information (CSI) reporting based on a plurality of a channel state information-reference signal (CSI-RS) resource indicators (CRIs) based on a plurality of resources may be processed.

In addition to the effect described above, other effects may be inferred from the description below.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDSCH and acknowledgment/negative acknowledgment (ACK/NACK) transmission process.
FIG. 6 illustrates an exemplary PUSCH transmission process.
FIG. 7 illustrates an example of a channel state information (CSI) related procedure.
FIG. 8 illustrates an antenna configuration and a port configuration within a panel.
FIG. 9 is a diagram for explaining channel state information (CSI) reporting according to an embodiment.
FIG. 10 is a flowchart of a method performed by a UE according to an embodiment.
FIG. 11 is a flowchart of a method performed by a BS according to an embodiment.
FIGS. 12 to 15 are diagrams illustrating an example of a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

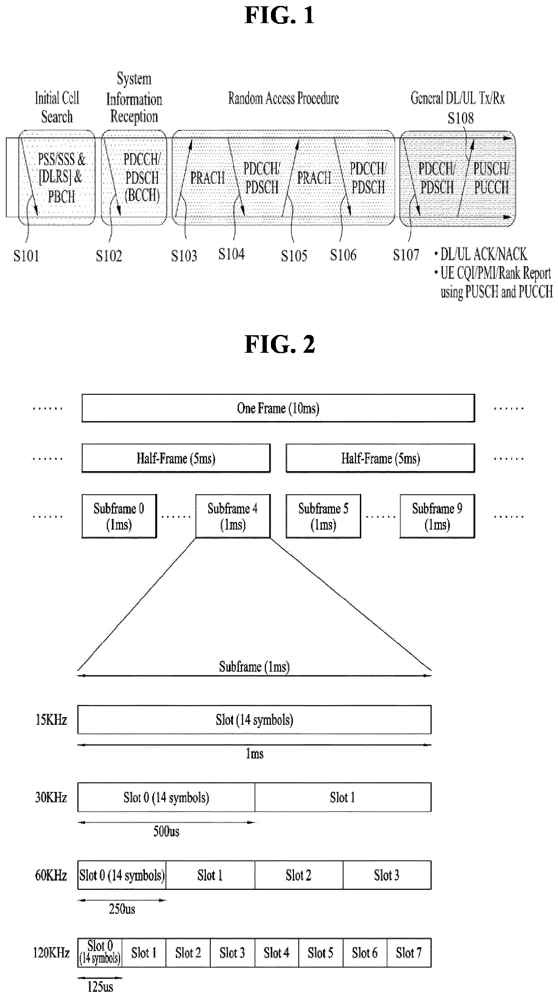

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N ^{slot}_{symb}: Number of symbols in a slot N ^{frame,u}ₛₗₒₜ: Number of slots in a frame N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

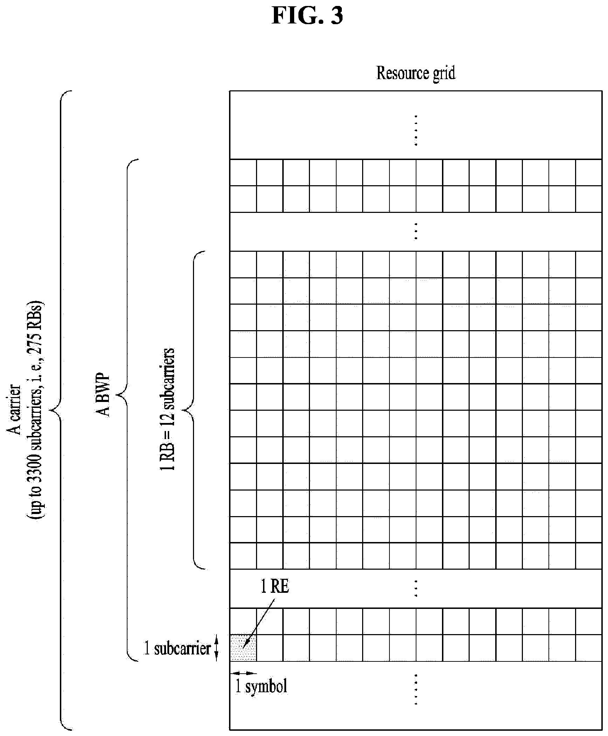

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

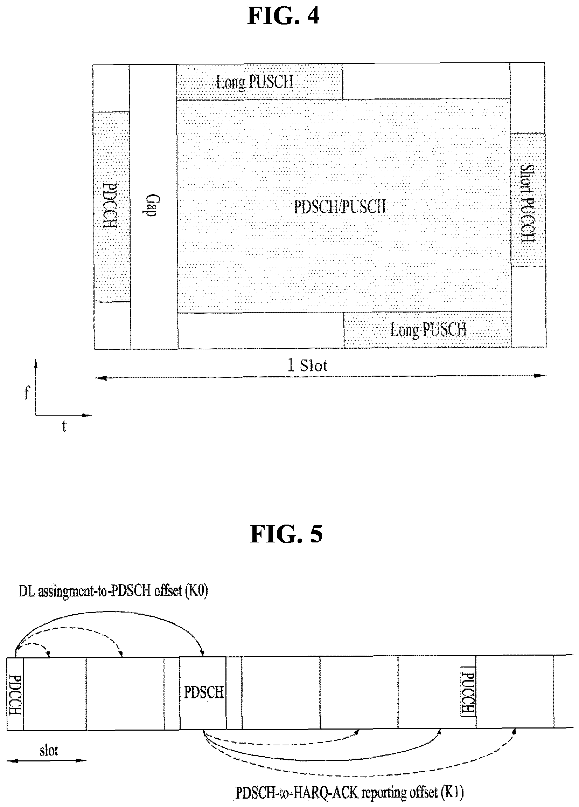

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols ${N}_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

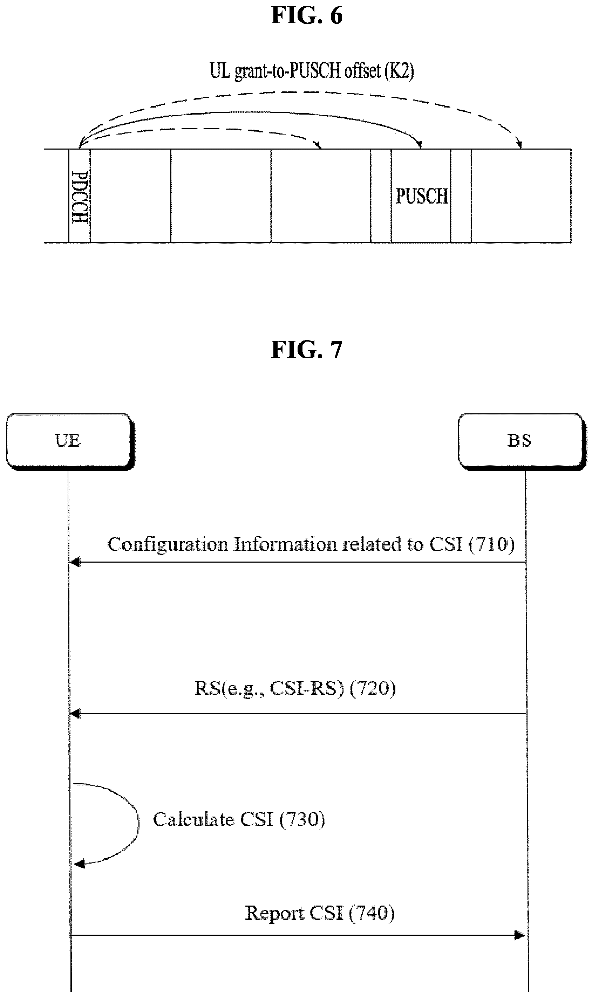

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook defined in the NR standard (e.g., PMI codebook) may be broadly divided into Type I codebook and Type II codebook. The Type I codebook mainly targets single user (SU)-MIMO that supports both high-order and low-order. The Type II codebook may mainly support MI-MIMO that supports up to 2 layers. Compared to the Type I codebook, the Type II codebook may provide more accurate CSI, but signaling overhead may increase. An Enhanced Type II codebook is introduced to address a disadvantage in terms of CSI overhead of the existing Type II codebook by reducing a payload of the codebook in consideration of a correlation of a frequency axis.

A CSI report via a PUSCH may be set to Part 1 and Part 2. The Part 1 has a fixed payload size and is used to identify the number of information bits in Part 2. The Part 1 may be entirely transmitted before Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes RI (if reported), CQI, and an indication of the number of non-zero WB amplitude coefficients per layer of Type II CSI. The Part 2 includes the PMI of Type II CSI.
- For Enhanced Type II CSI feedback, the Part 1 includes RI (if reported), CQI, and an indication of the total number of non-zero WB amplitude coefficients for all layers of Enhanced Type II CSI. The Part 2 includes the PMI of Enhanced Type II CSI.

If a CSI report on a PUSCH includes two parts and a CSI payload to be reported is less than a payload size provided by a PUSCH resource allocated for the CSI report, the UE may omit a part of Part 2 CSI.

A semi-persistent CSI report performed in PUCCH format 3 or 4 supports Type II CSI feedback, but only Part 1 of Type II CSI feedback.

Table 6 is an excerpt from the TS 38.214 standard document regarding CSI processing criteria.

**[Table 6]**

| |
|---|
| 5.2.1.6 CSI processing criteria |
| The UE indicates the number of supported simultaneous CSI calculations N_{CPU} with parameter simultaneousCSI-ReportsPerCC in a component carrier, and simultaneousCSI-ReportsAllCC across all component carriers. If a UE supports N_{CPU} simultaneous CSI calculations it is said to have N_{CPU} CSI processing units for processing CSI reports. If L CPUs are occupied for calculation of CSI reports in a given OFDM symbol, the UE has N_{CPU}-L unoccupied CPUs. If N CSI reports start occupying their respective CPUs on the same OFDM symbol on which N_{CPU}-L CPUs are unoccupied, where each CSI report n=0,...,N-1 corresponds to O_{CPU}⁽ⁿ⁾, the UE is not required to update the N-M requested CSI reports with lowest priority (according to Clause 5.2.5), where 0≤M≤N is the largest value such that Σₙ₌₀^{M-1}O_{CPU}⁽ⁿ⁾ ≤N_{CPU}-L holds. |
| A UE is not expected to be configured with an aperiodic CSI trigger state containing more than N_{CPU} Reporting Settings. Processing of a CSI report occupies a number of CPUs for a number of symbols as follows: |
| - O_{CPU}=0 for a CSI report with CSI-ReportConfig with higher layer parameter reportQuantity set to 'none' and CSI-RS-ResourceSet with higher layer parameter trs-Info configured |
| - O_{CPU}=1 for a CSI report with CSI-ReportConfig with higher layer parameter reportQuantity set to 'cri-RSRP', 'ssb-Index-RSRP', 'cri-SINR', 'ssb-Index-SINR', 'cri-RSRP- Index', 'ssb-Index-RSRP- Index', 'cri-SINR- Index', 'ssb-Index-SINR- Index ' or 'none' (and CSI-RS-ResourceSet with higher layer parameter trs-Info not configured) |
| - for a CSI report with CSI-ReportConfig with higher layer parameter reportQuantity set to 'cri-RI-PMI-CQI', 'cri-RI-i1', 'cri-RI-i1-CQI', 'cri-RI-CQI', or 'cri-RI-LI-PMI-CQI', |
| if max{ µPDCCH, µCSI-RS, µUL} ≤ 3, and if a CSI report is aperiodically triggered without transmitting a PUSCH with either transport block or HARQ-ACK or both when L = 0 CPUs are occupied, where the CSI corresponds to a single CSI with wideband frequency-granularity and to at most 4 CSI-RS ports in a single resource without CRI report and where codebookType is set to 'typel-SinglePanel' or where reportQuantity is set to 'cri-RI-CQI', O_{CPU}=N_{CPU}, |
| -- If a CSI-ReportConfig is configured with codebookType set to 'typel-SinglePanel' and the corresponding CSI-RS Resource Set for channel measurement is configured with two Resource Groups and N Resource Pairs, O_{CPU}=X·N+M, where X is the number of CPUs occupied by a pair of CMRs subject to mTRP-CSI-numCPU-r17 and M is defined in clause 5.2.1.4.2. |
| - If a CSI-ReportConfig contains a list of L sub-configurations provided by the higher layer parameter [csi-ReportSubConfigList], |
| - O_{CPU}=∑ᵢ₌₁^{L} Kₛⁱ, for periodic CSI reporting, where Kₛⁱis the total number of CSI-RS resources corresponding to the *i*-th sub-configuration. |
| - O_{CPU}=∑ᵢ₌₁^{N} Kₛⁱ for aperiodic and semi-persistent CSI reporting, where Kₛⁱis the total number of CSI-RS resources corresponding to the *i*-th sub-configuration, and where the *i*-th sub-configuration is from *N* indicated sub-configurations out of *L* sub-configurations contained in a *CSI-ReportConfig,* where *N* ≤ *L* and *N* ≥ 1. |
| - if a *CSI-ReportConfig* is configured with the higher layer parameter *reportQuantity* set to 'cri-RI-PMI-CQI', *codebookType* set to 'typeII-CJT-r18' or 'typeII-CJT-PortSelection-r18' and the corresponding *NZP-CSI-RS-ResourceSet* for channel measurement is configured with 1 *< N_{TRP}* ≤ 4 resources, *O_{CPU} = ceil*(*X* · *N_{TRP}*), where *X* ∈ {1, 1.5, 2} is reported by UE capability indication |
| - if a *CSI-ReportConfig* is configured with the higher layer parameter *reportQuantity* set to 'cri-RI-PMI-CQI' and with *codebookType* set to 'typeII-Doppler-r18' or 'typeII-Doppler-PortSelection-r18', |
| - if the corresponding CSI-RS Resource Set for channel measurement is aperiodic and configured with *K* CSI-RS resources, *O_{CPU}* = 8 for *K* = 12 and *O_{CPU}* = *Y*₁ · *K* for *K* < 12, where *Y*₁ ∈ {1, 2, 3} is reported by UE capability indication, |
| - if the corresponding CSI-RS Resource Set for channel measurement is periodic or semi-persistent and configured with a single CSI-RS resource, *O_{CPU}* = 4 for *N*₄ = 1 and *O_{CPU}* = *Y*₂ · *N*₄ ≥ 4, for *N*₄ > 1, where the value of *N*₄ is configured by the higher layer parameter *N4,* and *Y*₂ ∈ {2/3, 1, 2, 3} is reported by UE capability indication |
| - otherwise, O_{CPU}=Kₛ, where Kₛ is the number of CSI-RS resources in the CSI-RS resource set for channel measurement. |
| For a CSI report with *CSI-ReportConfig* with higher layer parameter *reportQuantity* not set to 'none', the CPU(s) are occupied for a number of OFDM symbols as follows: |
| - A periodic or semi-persistent CSI report (excluding an initial semi-persistent CSI report on PUSCH after the PDCCH triggering the report) occupies CPU(s) from the first symbol of the earliest one of each CSI-RS/CSI-IM/SSB resource for channel or interference measurement, respective latest CSI-RS/CSI-IM/SSB occasion no later than the corresponding CSI reference resource, until the last symbol of the configured PUSCH/PUCCH carrying the report. |
| - An aperiodic CSI report occupies CPU(s) from the first symbol after the PDCCH triggering the CSI report until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used. |
| - An initial semi-persistent CSI report on PUSCH after the PDCCH trigger occupies CPU(s) from the first symbol after the PDCCH until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used. |
| - A semi-persistent CSI report on PUSCH configured with the higher layer parameter *codebookType* set to 'typeII-Doppler-r18' or 'typeII-Doppler-PortSelection-r18' occupies CPU(s) from the first symbol of *K_{P}*-th latest consecutive periodic/semi-persistent CSI-RS occasions no later than CSI reference resource, until the last symbol of the PUSCH carrying the report, where the value of *K_{P}* ∈ {1,2,4} is indicated by UE capability. |
| For a CSI report with *CSI-ReportConfig* with higher layer parameter *reportQuantity* set to 'none' and *CSI-RS-ResourceSet* with higher layer parameter *trs-Info* not configured, the CPU(s) are occupied for a number of OFDM symbols as follows: |
| - A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for L1-RSRP computation, until Z₃'symbols after the last symbol of the latest one of the CSI-RS/SSB resource for channel measurement for L1-RSRP computation in each transmission occasion. |
| - An aperiodic CSI report occupies CPU(s) from the first symbol after the PDCCH triggering the CSI report until the last symbol between Z₃ symbols after the first symbol after the PDCCH triggering the CSI report and Z₃' symbols after the last symbol of the latest one of each CSI-RS/SSB resource for channel measurement for L1-RSRP computation. where (Z₃,Z₃') are defined in the table 5.4-2. |
| In any slot, the UE is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. When the PDCCH candidates are associated with a search space set configured with *searchSpaceLinkingId,* for the purpose of determining the NZP CSI-RS resource active duration, the PDCCH candidate that ends later in time among the two linked PDCCH candidates is used. For semi-persistent CSI-RS, starting from the end of when the activation command is applied, and ending at the end of when the deactivation command is applied. For periodic CSI-RS, starting when the periodic CSI-RS is configured by higher layer signalling, and ending when the periodic CSI-RS configuration is released. |
| If a CSI-RS resource is referred *N* times by one or more CSI Reporting Settings not configured with higher layer parameter *csi-ReportSubConfigList,* the CSI-RS resource and the CSI-RS ports within the CSI-RS resource are counted *N* times. |
| For a CSI-RS Resource Set for channel measurement configured with two Resource Groups and *N* Resource Pairs, if a CSI-RS resource is referred *X* times by one of the *M* CSI-RS resources, where *M* is defined in clause 5.2.1.4.2, and/or one or two Resource Pairs, the CSI-RS resource and the CSI-RS ports within the CSI-RS resource are counted *X* times. For a *CSI-ReportConfig* containing a list of *L* sub-configuration(s) provided by higher layer parameter *csi-ReportSubConfigList,* if a CSI-RS resource is referred by *M* sub-configurations among *N* triggered sub-configurations for CSI reporting for aperiodic CSI-RS resource, or L configured sub-configurations for CSI reporting for periodic or semi-persistent CSI-RS resource, the CSI-RS resource is counted min(M, K) times and the CSI-RS ports within the CSI-RS resource are counted max(Σₛ₌₁^{min(M,K)} Pₛ,P), where K is the maximum number of CSI sub-reports included in one CSI report subject to UE capability if the CSI-RS resource is periodic or semi-persistent and configured for semi-persistent or aperiodic CSI reporting, otherwise K=M, *P* is the number of ports configured by *nrofPorts* and *Pₛ* is the number of CSI-RS ports in s-th sub-configuration from *M* sub-configurations derived from the corresponding antenna port subset indicator [*port-subsetlndicator*] according to clause 5.2.1.4.2 if configured, otherwise Pₛ=P. |
| For a periodic or semi-persistent CSI-RS resource in a CSI-RS resource set for channel measurement linked to a *CSI-ReportConfig* configured with the higher layer parameter *codebookType* set to 'typeII-Doppler-rl8' or 'typeII-Doppler-PortSelection-rl8', the CSI-RS resource and the CSI-RS ports within the CSI-RS resource are counted *K_{P}* times, where the value of *K_{P}* ∈ {1,2,4} is indicated by UE capability. |

Table 7 is an excerpt from TS38.214 regarding a CSI computation time of a UE.

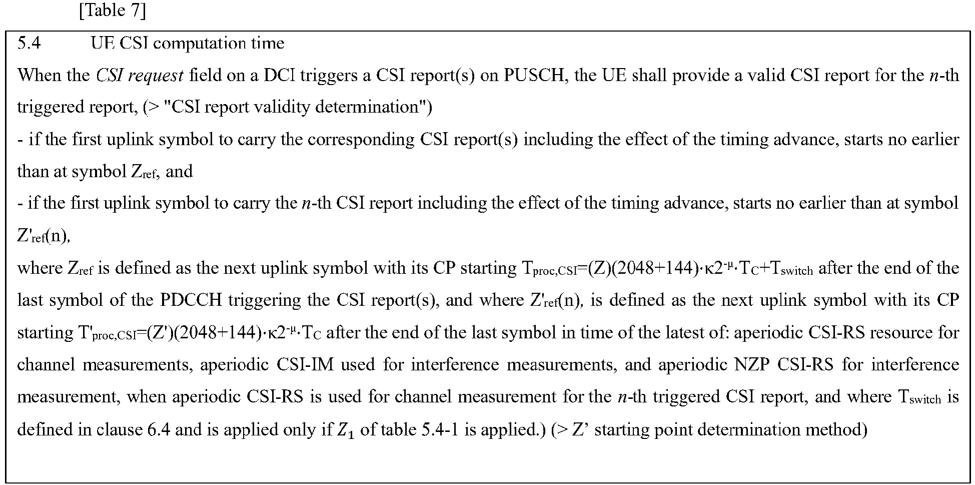

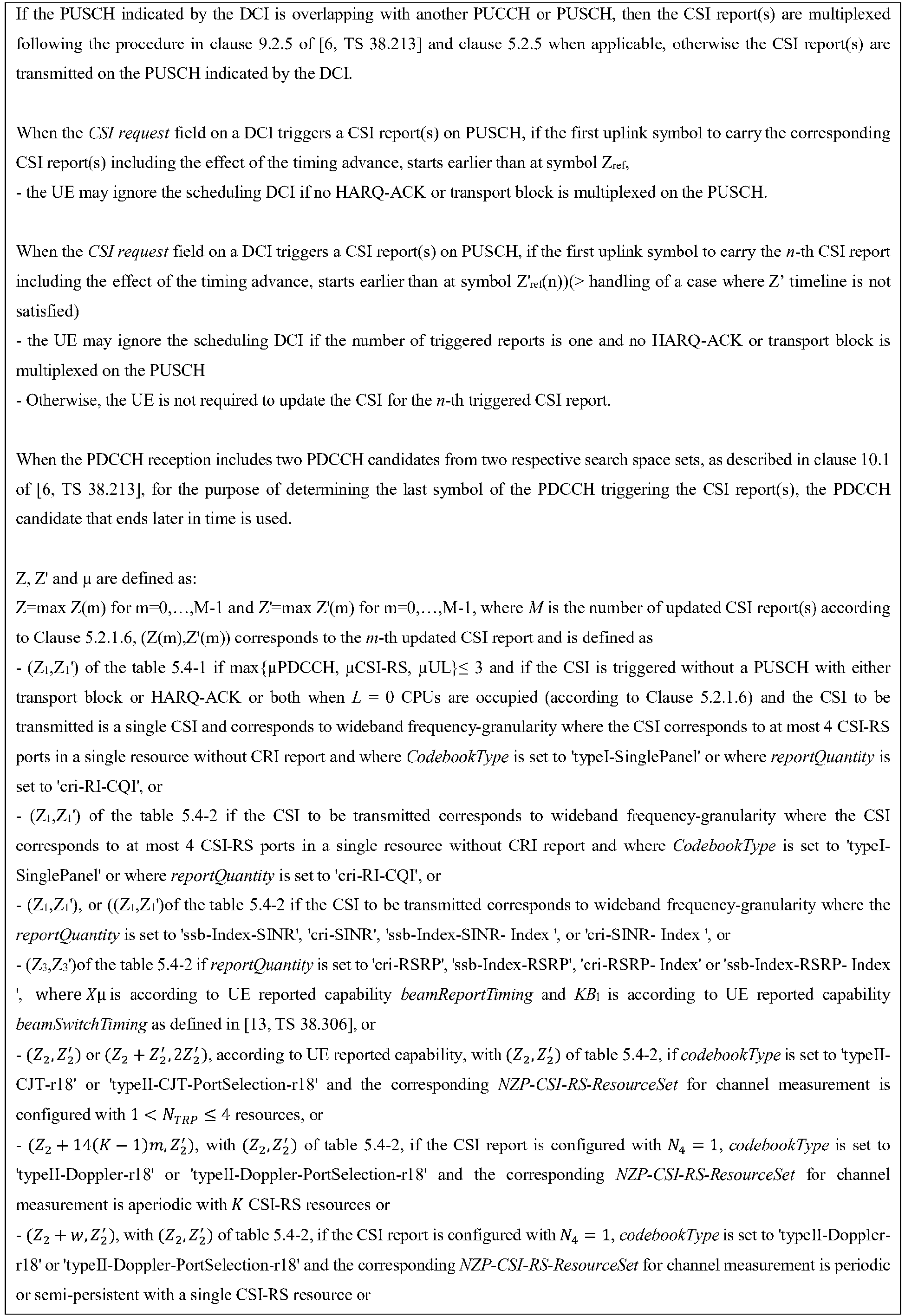

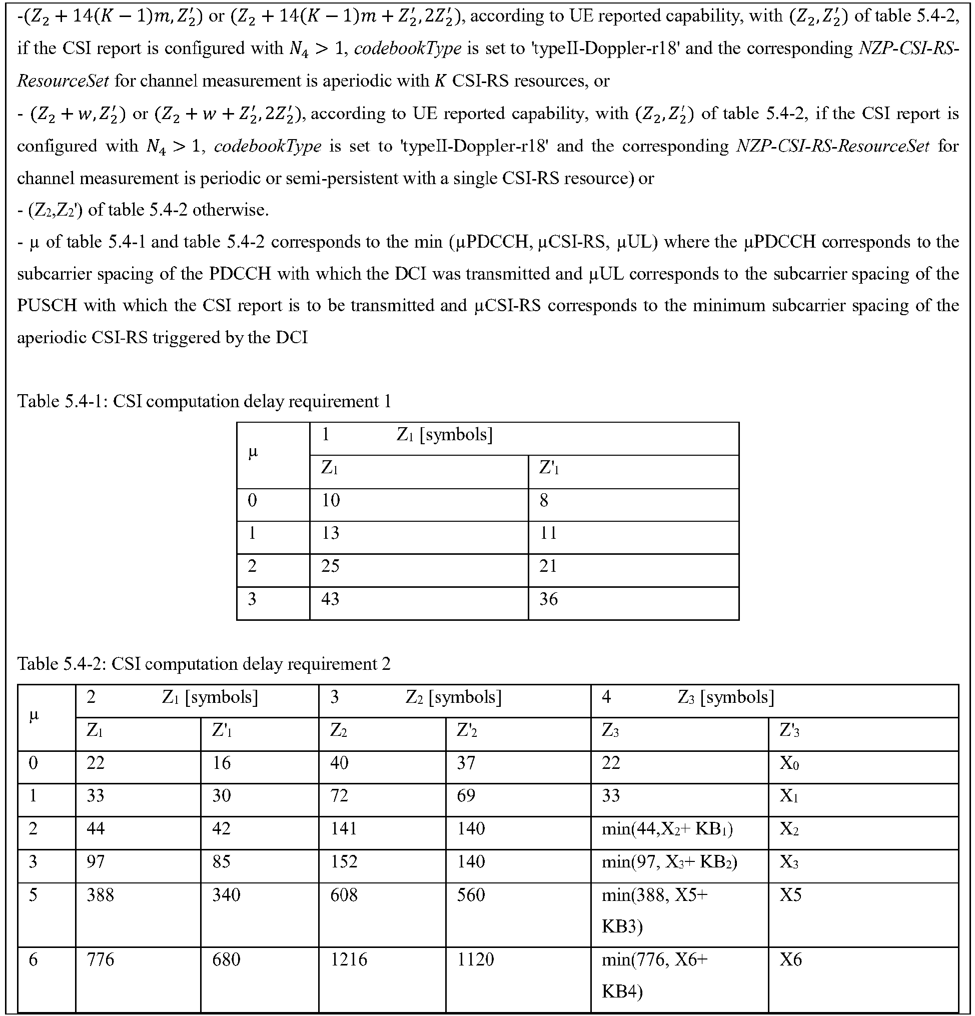

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

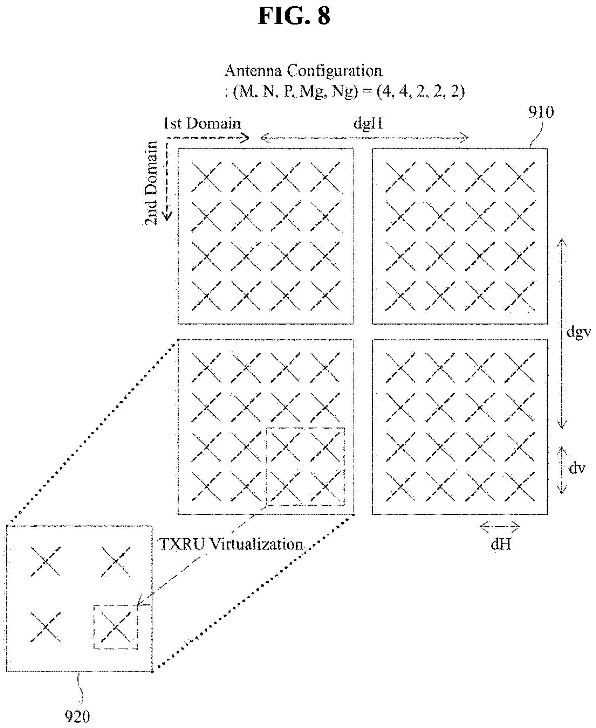

FIG. 8 illustrates an antenna configuration and a port configuration within a panel.

Referring to FIG. 8, an antenna configuration 910 may be configured for a first domain and a second domain, and transmit-receive unit (TXRU) virtualization may be applied to a relationship between the antenna configuration 910 and a port configuration 920.

Regarding the antenna configuration 910, M represents the number of columns in the panel (i.e., the number of antenna ports in the first domain within the panel), N represents the number of rows in the panel (i.e., the number of antenna ports in the second domain within the panel), P represents the polarization (1: co-pol, 2: X-pol), Mg represents the number of panels in the first domain, and Ng represents the number of panels in the second domain. Accordingly, the total number of antenna elements may be expressed as P*M*N*Mg*Ng. For example, the antenna configuration 910 shown in FIG. 8 corresponds to [(M, N, P, Mg, Ng) = (4, 4, 2, 2, 2)]. In FIG. 8, dgH represents a panel spacing in the first domain, dgV represents a channel spacing in the second domain, dH represents an antenna spacing in the first domain, and dV represents an antenna spacing in the second domain.

Regarding the panel configuration 920, N1 represents the number of columns in the first domain (i.e., the number of antenna ports in the first domain within the panel), N2 represents the number of rows in the second domain (i.e., the number of antenna ports in the second domain within the panel), and P represents the polarization (1: co-pol, 2: X-pol). Accordingly, the total number of CSI-RS ports in the panel may be expressed as P*N1*N2. For example, the panel configuration 920 shown in FIG. 8 corresponds to [(N1, N2, P) = (2, 2, 2)].

### CSI Codebook

A CSI codebook defined in the NR standard (e.g., precoding matrix indicator (PMI) codebook) may be broadly classified into Type I and Type II codebooks. For a better understanding of the codebook, Section 5.2.2.2 of TS 38.214 may be referenced (incorporated by reference).

### (1) Type I Codebook

The Type I codebook is primarily targeted at SU-MIMO (Single User MIMO) that supports both high and low orders. The Type I codebook may be divided into (i) single-panel codebooks and (ii) multi-panel codebooks. (i) The single-panel codebook may be based on the assumption that the UE receives DL transmission via a single antenna panel. (ii) The multi-panel codebook may support a BS configuration that uses multiple (e.g., 2 or 4) antenna panels. Unlike the single-panel codebook which supports ranks from 1 to 8, the multi-panel codebook may support ranks from 1 to 4.

The Type I codebook may be configured in terms of the selection of preferred discrete Fourier transform (DFT) vector(s) from an oversampled DFT vector set, which serves as the basis for the spatial domain (SD), and the indication of co-phase for the cross-polarization of BS antennas.

For example, a codebook vector for 1-layer transmission on a one-dimensional (1D) array antenna may be defined based on Equation 1. [Equation 1] $W \left(l\right) = \frac{1}{\sqrt{N}} \left[\begin{matrix}1 \\ {e}^{j \frac{2 π l}{ON}} \\ {e}^{j \frac{2 π l ∗ 2}{ON}} \\ … \\ {e}^{j \frac{2 π l ∗ \left(N-1\right)}{ON}}\end{matrix}\right]$

In Equation 1, N represents the number of antenna elements in the 1D antenna array, and O represents an oversampling factor. The index of the codebook vector, l may be l = 0, 1, 2, ..., O*N-1.

A precoder vector for a 2D antenna array may be defined based on the Kronecker product of two 1D array precoder vectors.

### (2) Type II Codebook

The Type II codebook primarily supports MU-MIMO (Multi-User MIMO) which supports up to two layers. Compared to the Type I codebook, the Type II codebook may provide more accurate CSI but may cause an increase in signaling overhead. In the Type II codebook, a PMI may identify a set of beams and a set of amplitude coefficients. The amplitude coefficients may be used to generate a weighted sum of beams. The Type II codebook may also identify the phase shift for co-phasing between beams. The Type II codebook for port selection may support reporting of wideband/long-term CSI (e.g., i1) and subband/short-term CSI (e.g., i2) based on a precoded (or beamformed) CSI-RS when the BS knows a channel between the UE and the BS.

In the case of the Type II codebook, multiple DFT vectors, which serve as the SD basis, are selected and linearly combined to achieve high resolution and superior MU-MIMO performance.

An enhanced Type II codebook has been introduced to address CSI overhead limitations of the conventional Type II codebook. The enhanced Type II codebook reduces the payload of the codebook by considering the correlation in the frequency domain.

### CSI processing unit and time for multiple CRI-based CSI reporting

Embodiments of a method of configuring a CSI processing unit occupancy rule and a CSI processing time when performing CSI reporting corresponding to a plurality of CSI-RSs will be described.

In the following description, channel measurement resource (CMR) may include CSI-RS resources (e.g., non-zero power CSI-RS) configured for channel measurement. An interference measurement resource (IMR) may include a CSI-RS resource set for interference measurement (e.g., zero/non-zero power CSI-RS).

In Rel-19 NR MIMO or later standards, CSI supporting up to 128 CSI-RS ports in FR1 may be considered to increase system throughput of DL/UL and for more flexible MIMO operation.
a. Type-I codebook refinement supporting up to a total of 128 CSI-RS ports across all resources, assuming legacy CSI-RS resources (with up to 32 CSI-RS ports per resource), based on extension of legacy codebooks.
b. Type-II codebook refinement supporting up to a total of 128 CSI-RS ports across all resources, assuming legacy CSI-RS resources (with up to 32 CSI-RS ports per resource), based on extension of legacy codebooks, without modifying any codebook parameter other than introducing additional values for the number of ports codebook parameter(s).
c. Extension of CRI(s)-based CSI reporting (CQI/PMI/RI calculated per CRI for ≥1 CRIs) for hybrid beamforming supporting up to a total of 128 CSI-RS ports across all resources, with up to 32 CSI-RS ports per resource, without new codebook design.

According to c above, multiple CSI-RS resource indicator (MCRI)-based CSI reporting is to receive a plurality of CSIs as a report according to a plurality of (analog) beamforming assumed by a BS from a UE and utilize the report for scheduling for MU-MIMO. CSI reporting may be performed for a plurality of CMR/IMR combinations for MU-MIMO assumed by the BS. Unlike existing CSI reports, such multiple CRI-based CSI reporting involves a plurality of CSI measurement and/or calculation according to multiple CMR/IMR and a plurality of corresponding CSI reports, and thus the CSI processing capability of the UE required for multiple CRI-based CSI reports is also different from existing reporting.

Therefore, CPU occupancy rule and CSI computation time (Z/Z') relaxation for multiple CRI-based CSI reporting (e.g., see the explanation for Z and Z' in Table 7) need to be additionally considered.

If the BS and the UE have different understandings of CPU occupancy for a specific CSI or CSI computation time, ambiguity may arise during CSI reporting and/or scheduling. Therefore, this specification proposes methods to address the issues raised above. Tables 6 and 7 may be referred to aid understanding of the contents proposed below.

Multiple CRI based CSI reporting may include Part 1 CSI and Part 2 CSI similar to the existing legacy CSI, and Part 1 CSI mainly includes CSIs that affect a payload of Part 2 CSI with a fixed payload, such as CRI/1^{st} CQI/RI/non-zero coefficient indicator (for Type 2 CSI). Part 2 CSI includes the remaining CSIs excluding the Part 1 CSI, and may typically include 2^{nd} CQI, LI, and PMI. In the case of multiple CRI based CSI reporting, RI/CQI/PMI/LI, and the like may be calculated/reported for each of a plurality of CSIs (e.g., L) selected/reported by CRI from a combination of CMR (group) and/or IMR, or some CSI elements may be commonly reported to a plurality of CMR (groups) and/or IMRs.

For convenience of explanation, the number of channel measurement resources (CMR) that the BS configures to the UE for MCRI CSI reporting is referred to as K, and the number of interference measurement resources (IMR) is referred to as J. Here, IMR may mean ZP CSI-RS (i.e., CSI-IM) and/or NZP CSI-RS for interference measurement. The (maximum) number of CSI to be reported in the MCRI based CSI reporting is referred to as L (which is a value to be configured by the BS or based on the UE capability), and the number of CSI actually reported by the UE is referred to as M (L≥M).

### Proposal 1

### A multiple CRI-based CSI report may follow at least some of the following CPU occupancy rules.

(1) Method 1: A CPU occupancy value may be determined based on a mapping relationship between the number of CMRs configured by a BS to a UE via a higher layer and the number of IMRs. When CMR and IMR have a 1:1 mapping relationship, a CPU is occupied as much as K. O_{CPU}=K. When a plurality of IMRs are mapped to one CMR, that is, when Jₖ IMRs are mapped to a k-th CMR, the CPU may be occupied as much as O_{CPU}=Σₖ₌₁^{K} Jₖ.
(2) Method 2: In Method 1, the CPU may be occupied by a value obtained by multiplying the CPU occupancy rule multiplied by α (>1), and the α value is a value to be reported as a UE capability of the UE or a preconfigured value. For example, CPU occupancy: O_{CPU}=K*α or O_{CPU}=α*Σₖ₌₁^{K} Jₖ, where α (>1) is a scaling factor, and the value may be configured/determined based on the M or L value.
(3) Method 3: CMR/IMR that is only measured by the UE and CMR/IMR on which CSI reporting is performed are separated from each other and are configured with different CPU occupancy values. For example, O_{CPU} =M*β+(K-M)*γ or O_{CPU} =M*β + ( (Σₖ₌₁^{K}Jₖ) - M)*γ, where β≥1 and γ≤1 may be scaling factors.
(4) Method 4: An additional CPU offset values for a plurality of CSI calculations/configurations is considered in Method 1. For example, O_{CPU}=K + X or Σₖ₌₁^{K} Jₖ + X, where X may be an additional CPU offset value.
(5) Method 5: IMR may be mapped CMR group wise, for the same CMR group, RI and/or PMI (e.g., WB PMI) may be assumed to be group common reports, thereby reducing CPU occupation, and the CPU value may be determined as O_{CPU}=G below. Here, G is the number of CMR groups.

### Detailed examples of Methods 1 to 5 of Proposals 1 to 5 described above are described.

(1) Method 1 is a method of determining CPU occupancy based on the mapping relationship between CMR and IMR, and as the simplest example, assuming that CMR and IMR have a 1:1 mapping relationship, the CPU occupancy may be the number of CMRs configured by the BS to the UE. This is considered as the worst case implementation of the UE, and the CSI of each CMR is calculated and then the best CMR(s) is selected, and thus the CPU occupancy may be configured to the number of CMRs. If the CMR and IMR are not in a 1:1 mapping relationship and a plurality of IMRs are configured for one CMR, the calculated CSI according to the IMR changes, and thus in this case, CSI calculation needs to be performed separately for the plurality of IMRs. Therefore, the CPU needs to be occupied as many times as the total number of CMR and IMR pairs. The generalized formula therefor is O_{CPU}=Σₖ₌₁^{K} Jₖ, where Jₖ is the number of IMRs applied to the k-th CMR.
(2) Method 2 may require additional processing (e.g., calculation of common RI/CQI/PMI) for processing a plurality of CSIs in the case of MCRI CSI reporting that measures CSI based on a plurality of CMRs and/or IMRs and reports the plurality of CSIs at once compared to the existing CRI reporting (when a single CSI is reported for the plurality of CMRs). Therefore, compared to Method 1, Method 2 means a method that introduces an additional scaling factor (e.g., α>1) and occupies more space as much as an additional CSI processing compared to Method 1. The scaling factor α may be used without change in a capability value of a UE, or the BS may use a value configured based on the capability of the UE. Alternatively, the scaling factor α may be a pre-defined value (one that is predefined in the standard).
(3) Method 3 is an example of applying different values of CPU occupancy by distinguishing between CMR/IMR that only performs measurement/calculation and does not perform CSI reporting and CMR/IMR pairs that perform measurement/calculation as well as CSI reporting. Method 3 may be performed based on a scaling factor β≥1 and γ ≤ 1. For CMR/IMR pairs in which CSI is reported, additional processing based on a plurality of CSI calculations is considered. The scaling factors β and γ may be used without change in a capability value of a UE, or the BS may use a value configured based on the capability of the UE. Alternatively, the scaling factors β and γ may each be a pre-defined value (one that is predefined in the standard).
(4) Method 4 is an example that considers additional CPU processing from Method 1. Method 2 considers CPU occupancy by multiplying Method 1 by a scaling factor, but Method 4 is a method that adds a constant value (offset X) that considers additional processing such as a plurality of CSI calculations/encodings in Method 1. The offset X may be used without change in a capability value of a UE, or the BS may use a value configured based on the capability of the UE. Alternatively, the offset X may be a pre-defined value (one that is predefined in the standard).
(5) Method 5 corresponds to a case in which a CMR group wise operation is performed. For example, a case in which the K CMRs are divided into G groups (either uniformly or based on a predefined rule) and the CSI is reported based on a group index CRI may be considered. In this case, configuration of IMR may be configured G CMR group wise. For group-wise MCRI based CSI reporting, additional restrictions on CSI calculations may be added for the same CMR group. For example, group wise RI/group wise PMI (e.g., WB PMI) may be considered. In this case, the CSI calculation performs one CSI calculation representing the group, which has an advantage of greatly reducing CPU occupancy. For example, O_{CPU}=G may be configured, or a reduced CPU may be occupied compared to Proposal 1. For example, O_{CPU}=Σ_{g=1}^{G} Φ*(Σₖ₌₁^{Kg} J_{k,g}) may be configured, where K_{g} is the number of CMRs configured in a CMR group, and J_{k,g} is the number of IMRs mapped to (g,k)-th CMR. Φ (<1) means a scaling factor, and is a value to be determined based on the capability of the UE. To simplify the CPU occupancy rule, assuming one IMR per CMR, the CPU occupancy rule may be simplified as O_{CPU}=Σ_{g=1}^{G} Φ*K_{g.} Alternatively, CPU occupancy per group may be similarly represented. For example, O_{CPU}=ρ*G may be configured, and ρ≥1 may be configured to indicate CPU occupancy per group. ρ(≥1) represents a scaling factor and is a value to be determined based on the capability of the UE or a value to be determined based on a K_{g} value.

### Methods 1/2/3/4/5 of Proposal 1 may be used alone or in combination.

Proposal 1 is a proposal for CPU occupancy values in MCRI based CSI reporting. A time line occupied by the CPU of Proposal 1 may be configured or promised as follows.

MCRI based CSI reporting occupies CPU from the first symbol of the earliest one of each CSI-RS/CSI-IM of all triggered resources, respective latest CSI-RS/CSI-IM/NZP CSI-RS for interference measurement occasion no later than the corresponding CSI reference resource, until the last symbol of the configured PUSCH/PUCCH carrying the report.

### Proposal 2

CSI supported in NR includes type 1 CSI and type 2 CSI, and the number of supported CSI-RS ports ranges from 1 to 32 (expected to increase to 128 in R19). Especially for PMI calculation, the computational complexity may vary depending on a codebook type and/or codebook parameter and/or # of CSI-RS ports, and thus a time required to calculate CSI may vary.

### Considering this, a CSI latency (Z/Z') value similar to Proposal 2 is proposed.

As an example of Proposal 2, a CSI calculation latency (e.g. Z, Z', or CSI reference resource timing) value of MCRI-based CSI reporting may be determined as a value obtained by applying an offset value w to a value configured for existing legacy CSI reporting (e.g., Z/Z' + w).

Referring to Table 7, in the current 38.214 standard, Table 5.4-1 or Table 5.4-2 defines values for Z/Z' according to numerology.

The Z and Z' values are values applied only to AP CSI reports, and the UE determines whether conditions for valid CSI reporting are satisfied based on the Z and Z' values. The BS needs to schedule a time domain resource of a UL channel to be greater than or equal to the Z and Z' values, and otherwise, the UE may not be ensured a sufficient time for a CSI process and may not properly perform a CSI report.

Z defines a minimum time required for the UE to perform the CSI process from a time of completion of reception of UL scheduling DCI that triggers an AP CSI report to a time of start of transmission of the corresponding AP CSI report. In detail, the Z value relates to a time length from the last symbol of a PDCCH that triggers a CSI report to a first symbol of the CSI report. The UE calculates Zref based on the Z value. To meet a requirement of a valid CSI report, the time length from an end of the last symbol of the PDCCH that triggers the CSI report to the start of the CP of the first symbol of the CSI report needs to be at least Zref. Otherwise, the UE may not perform a CSI report requested by the corresponding PDCCH because it is not a valid CSI report.

Z' defines a minimum time required by the UE to perform the CSI process from the last time of AP CMR/IMR measurement to the start time of transmission of AP CSI report. In detail, the Z value relates to a time length from the last symbol of a CSI-RS resource to a first symbol of the CSI report. The UE calculates Z'ref based on the Z' value. To meet a requirement of a valid CSI report, the time length from an end of the last symbol of the CSI-RS resource to the start of the CP of the first symbol of the CSI report needs to be at least Zref. Otherwise, the UE may not perform the corresponding CSI report because it is not a valid CSI report.

The Z' value is used to determine a CSI reference resource (slot) for the AP CSI report, thereby determining the last slot in which the UE is capable of performing channel/interference measurement for the corresponding CSI calculation. Even if the last slot is determined as such, if some of the later symbols within the corresponding slot are used for measurement, the CSI processing time of the UE may be insufficient again. Considering this, there is also a limitation that when P/SP CSIRS is configured as the CMR of the AP CSI report, measurement needs to be completed before a transmission start time of the AP CSI report - Z' (symbol). Considering this, if AP CSIRS is configured to the CMR/IMR of the AP CSI report, and AP CMR/IMR is configured at or after the transmission start time of AP CSI report - Z' (symbol), the UE may not perform the CSI report properly.

The newly introduced MCRI-based CSI reporting requires more CSI to be reported and/or more payload and/or more computation complexity than the existing CRI-based reporting. Considering this, a method of newly determining the Z and Z' values or a relaxation method to alleviate a burden on UE processing by increasing the Z and Z' values is proposed for multiple CRI-based CSI reporting.

As an example of Proposal 2, an additional CSI computation delay may be imparted by applying an additional offset value w to the existing Z/Z' values as shown in Table 7. The offset value w may be configured/applied based on at least one of the following methods, but is not limited thereto.
(1) Method 1: The offset value w may be determined by applying (e.g., multiplying) a specific scaling Φ value to the existing Z/Z' value (e.g., Table 7). The scaling value Φ may be determined based on the number of reported CSIs (M) and/or the maximum number of CSI reports (L) configured by the UE. For example, Φ may be determined proportionally to the value of M.
(2) Method 2: The offset value w may be determined by applying (e.g., multiplying) a specific scaling Φ value to the existing Z/Z' value (e.g., Table 7). The scaling value Φ may be determined based on the number of CMR/IMR pairs (K and J) configured by the BS to the UE.

Detailed examples of Methods 1 and 2 of Proposal 2 described above are described.
(1) Although the w (or Φ) value may be determined based on the M value in Method 1, the BS may actually know the number of CSI reported by the UE by receiving the CRI report of the UE, and thus there may be a difference in understanding of the M value between the BS and the UE. Therefore, as another example of determining the w (or Φ) value, the w (or Φ) value may also be determined based on the maximum number L of CSI that the BS configures/indicates the UE to report. The scaling factor value Φ is a value determined based on the UE capability of the UE or a value that is to be configured by the BS. In Method 1, the new Z/Z' value may be determined as new Z/Z'= (legacy) Z/Z'+ (legacy) Z/Z'* w. w may be a positive integer. For example, w = L (or M) * Φ, where Φ may be determined based on, but is not limited to, UE capability reporting. As another example, w may be 1. When w=1, it may also be expressed as new Z/Z'= (legacy) Z/Z'* 2.
(2) For Method 2, in calculation of w, the value of L (or M) is replaced and determined/configured to K or Σk=1K Jk (according to a CMR/IMR mapping relationship). This is because Method 2 considers calculation of the CSI of the UE of the worst case and the UE needs to calculate CSI for all configured/triggered CMR/IMR pairs.

Proposal 1 is a CPU application method that considers CMR/IMR pairs, and thus when it is configured conservatively, the CPU may be excessively occupied. To prevent this, for MCRI-based CSI reporting, a single CPU (or a CPU with fewer CMRs/IMRs than the number of methods in Proposal 1) may be occupied like L1-RSRP, but Z/Z' in Proposal 2 may be relaxed to perform serial processing. In this case, the scaling value Φ of Method 2 in Proposal 2 may be scaled not by CMR/IMR 'pair' but by the number of CMRs and/or the number of IMRs (e.g., K, J, and K+J).

The above proposals are not limited to MCRI based CSI reporting, and may also be extended to perform single/multiple CSI reporting (i.e., equivalent to 2-1/2-2 on WID) for a large aggregated channel in which multiple CSI-RS resources are aggregated (e.g., 32port CSI-RS + 32port CSI-RS = 64port CSI-RS or 32port CSI-RS * 4 = 128port CSI-RS).

Proposals 1/2 may be used alone or in combination.

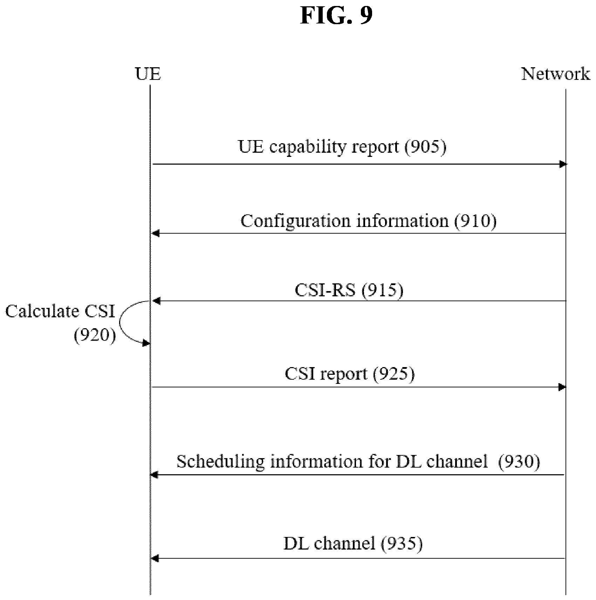

FIG. 9 is a diagram illustrating CSI reporting according to at least some of Proposal 1/2. In FIG. 9, some UE/BS operations may be omitted.

Referring to FIG. 9, a UE may transmit a UE capability report to a BS (905). The UE capability report may include at least one of the maximum number of supportable CSI-RS resources, the number of CSI-RS ports, the total number of simultaneously supportable CSI-RS ports, and/or the number of Rx antenna groups.

The UE may receive configuration information from the BS via higher layer signaling (910). The configuration information may include configuration information for CSI-RS transmission and/or configuration information related to CSI reporting.

The BS may transmit CSI-RS to the UE (915).

The UE may measure/predict/calculate CSI based on the CSI-RS (920).

The UE may report measured/predicted/calculated CSI to the BS (925).

The UE may receive information for scheduling a downlink channel (e.g., PDCCH or PDSCH) from the BS (930).

The UE may receive a scheduled downlink channel/signal from the BS (935).

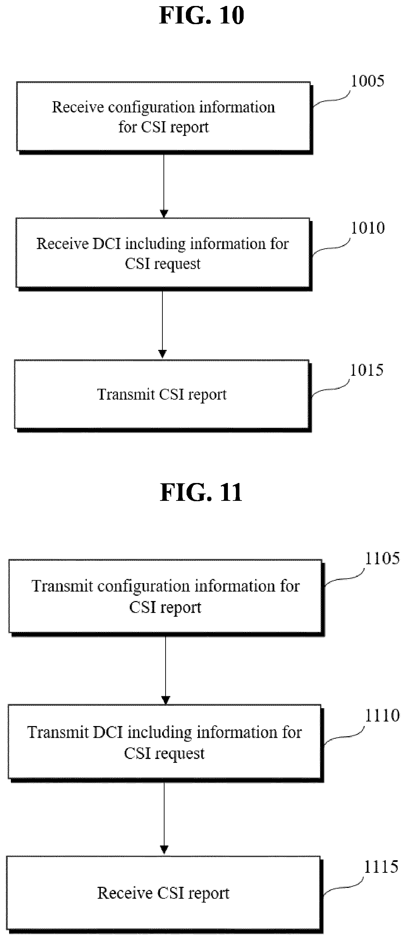

FIG. 10 is a flowchart of a method performed by a UE according to an embodiment.

Referring to FIG. 10, the UE may receive information about channel state information (CSI) reporting configuration via higher layer signaling (1005).

The UE may receive downlink control information (DCI) including information for a CSI request through a physical downlink control channel (PDCCH) (1010).

The UE may transmit a CSI report related to the CSI request based on satisfaction of the conditions for a valid CSI report

(1015). The UE may determine whether the conditions for the valid CSI report are satisfied based on the Z value and the Z' value. The Z value may be related to a time length from the last symbol of the PDCCH to the first symbol of the CSI report. The Z' value may be related to a time length from the last symbol of a channel state information-reference signal (CSI-RS) resource to the first symbol of the CSI report. The UE may increase the Z value and the Z' value by multiplying a scaling value based on the CSI report being related to a plurality of CSI-RS resource indicators (CRIs).

The CSI processing unit (CPU) value occupied by the CSI report may be determined based on the number of channel measurement resources (CMRs) related to the plurality of CRIs.

The CPU value occupied by the CSI report may be determined by multiplying the number of the CMRs by a second scaling value determined according to the capability of the UE.

The CPU value occupied by the CSI report may be determined based on a combination of the number of the CMRs and the number of interference measurement resources (IMRs) related to the plurality of CRIs.

The CSI report may include a plurality of CSIs for a plurality of CSI-RS resources. The scaling value may be determined based on the number of the plurality of CSIs.

The scaling value may be determined based on the number of the plurality of CRIs.

The scaling value may be an integer 2.

The CSI report may be an aperiodic CSI report transmitted through a physical uplink shared channel (PUSCH).

FIG. 11 is a flowchart of a method performed by a BS according to an embodiment.

Referring to FIG. 11, the BS may transmit information about channel state information (CSI) reporting configuration to a UE via higher layer signaling (1105).

The BS may transmit downlink control information (DCI) including information for a CSI request to the UE through a physical downlink control channel (PDCCH) (1110).

The BS may receive a CSI report related to the CSI request from the UE based on satisfaction of the conditions for a valid CSI report (1115). Based on the Z value and the Z' value, whether the conditions for a valid CSI report are satisfied may be determined. The Z value may be related to a time length from the last symbol of the PDCCH to the first symbol of the CSI report. The Z' value may be related to a time length from the last symbol of a channel state information-reference signal (CSI-RS) resource to the first symbol of the CSI report. Based on the CSI report being related to a plurality of CSI-RS resource indicators (CRIs), the Z value and Z' value may be increased by multiplying a scaling value.

The CSI processing unit (CPU) value occupied by the CSI report may be determined based on the number of channel measurement resources (CMRs) related to the plurality of CRIs.

The CPU value occupied by the CSI report may be determined by multiplying the number of the CMRs by a second scaling value determined according to the capability of the UE.

The CPU value occupied by the CSI report may be determined based on a combination of the number of the CMRs and the number of interference measurement resources (IMRs) related to the plurality of CRIs.

The CSI report may include a plurality of CSIs for a plurality of CSI-RS resources. The scaling value may be determined based on the number of the plurality of CSIs.

The scaling value may be determined based on the number of the plurality of CRIs.

The scaling value may be an integer 2.

The CSI report may be an aperiodic CSI report received through a physical uplink shared channel (PUSCH).

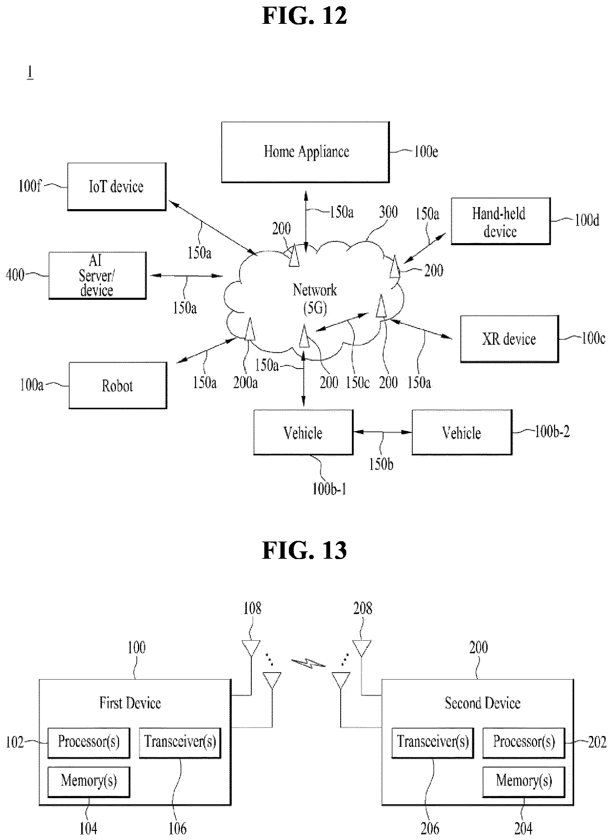

FIG. 12 illustrates a communication system 1 applied to the present disclosure.

Referring to FIG. 12, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

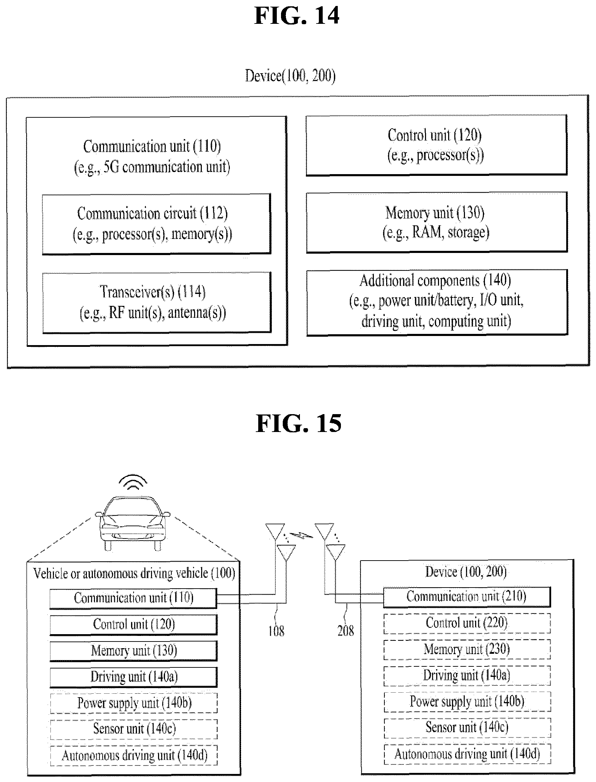

FIG. 14 illustrates another example of a wireless device applied to the present disclosure. The wireless device may be implemented in various forms according to a use-case/service (refer to FIG. 12).

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 15 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), the method comprising:
receiving information about a channel state information (CSI) reporting configuration via higher layer signaling;
receiving downlink control information (DCI) including information for a CSI request through a physical downlink control channel (PDCCH); and
transmitting a CSI report related to the CSI request based on a condition for a valid CSI report being satisfied,
wherein the UE determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and
wherein the UE increases the Z value and the Z' value by multiplying a scaling value based on the CSI report being related to a plurality of CSI-RS resource indicators (CRIs).

2. The method of claim 1, wherein a CSI processing unit (CPU) value occupied by the CSI report is determined based on a number of channel measurement resources (CMRs) related to the plurality of CRIs.

3. The method of claim 2, wherein the CPU value occupied by the CSI report is determined by multiplying the number of the CMRs by a second scaling value determined according to a capability of the UE.

4. The method of claim 2, wherein the CPU value occupied by the CSI report is determined based on a combination of the number of CMRs and a number of interference measurement resources (IMRs) related to the plurality of CRIs.

5. The method of claim 1, wherein the CSI report includes a plurality of CSIs for a plurality of CSI-RS resources, and
wherein the scaling value is determined based on a number of the plurality of CSIs.

6. The method of claim 1, wherein the scaling value is determined based on a number of the plurality of CSIs.

7. The method of claim 1, wherein the scaling value is an integer 2.

8. The method of claim 1, wherein the CSI report is an aperiodic CSI report transmitted through a physical uplink shared channel (PUSCH).

9. A non-transitory computer-readable recording medium having recorded thereon a program for performing the method of claim 1.

10. A device comprising:
a memory configured to store instructions; and
a processor configured to perform operations by executing the instructions,
wherein the operations of the processor include:
receiving information about a channel state information (CSI) reporting configuration via higher layer signaling;
receiving downlink control information (DCI) including information for a CSI request through a physical downlink control channel (PDCCH); and
transmitting a CSI report related to the CSI request based on a condition for a valid CSI report being satisfied,
wherein the device determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and
wherein the device increases the Z value and the Z' value by multiplying a scaling value based on the CSI report being related to a plurality of CSI-RS resource indicators (CRIs).

11. The device of claim 10, further comprising a transceiver,
wherein the device is a user equipment (UE) in a wireless communication system.

12. The device of claim 10, wherein the device is a processing device configured to control a user equipment (UE) in a wireless communication system.

13. A method performed by a base station (BS), the method comprising:
transmitting information about a channel state information (CSI) reporting configuration to a user equipment (UE) via higher layer signaling;
transmitting downlink control information (DCI) including information for a CSI request to the UE through a physical downlink control channel (PDCCH); and
receiving a CSI report related to the CSI request from the UE based on a condition for a valid CSI report being satisfied,
wherein whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and
wherein, based on the CSI report being related to a plurality of CSI-RS resource indicators (CRIs), the Z value and the Z' value are increased by multiplying a scaling value.

14. A non-transitory computer-readable recording medium having recorded thereon a program for performing the method of claim 13.

15. A base station (BS) comprising:
a memory configured to store instructions; and
a processor configured to perform operations by executing the instructions,
wherein the operations of the processor include:
transmitting information about a channel state information (CSI) reporting configuration to a user equipment (UE) via higher layer signaling;
transmitting downlink control information (DCI) including information for a CSI request to the UE through a physical downlink control channel (PDCCH); and
receiving a CSI report related to the CSI request from the UE based on a condition for a valid CSI report being satisfied,
wherein whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) resource to the first symbol of the CSI report, and
wherein, based on the CSI report being related to a plurality of CSI-RS resource indicators (CRIs), the Z value and the Z' value are increased by multiplying a scaling value.
